# EUROPEAN PATENT SPECIFICATION

(11) **EP 3 083 173 B1**
(45) Date of publication and mention of the grant of the patent: **22.01.2020**
(21) Application number: 14821134.5
(22) Date of filing: 17.12.2014
(51) Int. Cl.: B27N 3/04, B27N 3/14, B27N 1/02

(54) **PANEL**
PANEEL
PANNEAU

(30) Priority: 18.12.2013 DE 102013226510
(43) Date of publication of application: 26.10.2016
(73) Proprietor: Mayfair Vermögensverwaltungs SE, 20354 Hamburg (DE)
(72) Inventor: NIJSSE, Jeroen, NL-4433BG Hoedekenskerke (NL)
(74) Representative: Gille Hrabal
(86) International application number: PCT/EP2014/078134
(87) International publication number: WO 2015/091596

(56) References cited:
- CA-C- 2 296 554
- DE-A1- 4 213 928
- DE-A1- 10 116 686
- DE-A1-102009 039 018
- DE-U1- 8 128 311
- US-A- 4 666 029
- US-A1- 2002 100 565

## Description

The invention concerns an OSSB panel.

OSSB is the abbreviation for Oriented Structural Straw Board and represents a new sort of panel material for the construction industry on the basis of straw as agricultural waste material. OSSB panels are therefore so-called green economy products.

In the following description, the term "straw" comprises also other lignocellulose materials with straw-like structure such as rice straw or bamboo.

The patent document CA02296554C discloses a method to produce an OSSB panel, wherein longitudinal binder covered straw with a particle length of about 50 to 100 mm is compressed to an OSSB panel for the construction industry.

The document WO0202886 discloses a structural biocomposite panel made of flat, non-wooden, cellular strands with a particle length of smaller than 50 mm. The panel can comprise two or more layers, wherein the particles are divided depending on length and only particles in a certain length segment are used for a certain layer of the panel.

The document EP0860255A1 disclose a method to produce a construction board, preferably OSB panel (oriented strand board), with about 75 mm to 150 mm long and longitudinal oriented particles in the surface layers as well as about 25 mm to 75 mm long and cross-oriented particles in there below arranged layers, and smaller than 25 mm long and cross-oriented particles in a centered layer. An apparatus to distribute the particles in a length depending manner onto a conveyor belt is divided in two parts, so that two material flows of particles can be at the same time distributed on the conveyor belt, so that a mat with the above described layers with particles of a certain length segment is generated. The mat is later compressed to a panel.

In the construction industry, panels of compressed, light, fibrous materials are applied in load bearing applications as well as for the purpose of decorative completion of the interior.

The industrial production of OSSB panels according to the patent document CA02296554C, which fulfill the same mechanical and other regulative requirements like f. ex. those for an OSB panel for the approval and the usage in the construction industry in Europe, Japan, USA and other international countries, is very difficult and expensive (WO0202886, page 4 to 6). Furthermore, straw with particle length over 102 mm is basically not suitable for filtering or screening related to the particle length in order to produce a multi-layer panel (WO0202886, pages 21 to 22).

The documents US2002/100565A1 and DE10116686A1 also disclose panels that are produced based on straw.

CA02296554C discloses a panel in accordance with the preamble of claim 1.

The purpose of the invention is to provide a further developed OSSB panel for an industrial and economic production and usage.

For the solution of the problem serves an OSSB panel according to the independent claim 1.

A scattering head for distribution of binder covered material particles on a conveyor belt is disclosed. Particularly, the material particles for the production of OSSB panels mostly comprise longitudinal split straw or the material particles for the production of OSB panels mostly comprise longitudinal wooden particles (e.g. wooden flakes, chips or thin woodchips).

The material particles, which are distributed on the conveyor belt by the scattering head, usually form a mat on the longitudinal and basically only in one direction moving conveyor belt and are later compressed to an OSSB panel or OSB panel, respectively.

The scattering head has the largest expansion in longitudinal direction and is arranged in longitudinal direction substantially in parallel above the conveyer belt. The longitudinal direction of the conveyor belt thus corresponds substantially to the longitudinal direction of the scattering head.

The scattering head has rotatable spindles with a distance between each other in longitudinal direction of the conveyor belt, wherein the spindles each comprise a shaft in crosswise direction to the longitudinal direction of the conveyor belt, wherein a multiplicity of disks are arranged with a distance between each other at the shaft. At least at some of the disks of two neighbored spindles, the disk radius is bigger than half of the longitudinal distance between the shafts of the neighbored spindles, so that the disks overlap at least partially.

The scattering head comprises a control unit with at least two different operation configurations, wherein the direction of rotation of at least one spindle, preferably of most of the spindles, even further preferred all spindles of the scattering head, are defined by the operation configuration.

By means of providing a control unit with at least two different operation configurations, it is enabled that at least two different products can be produced with the selfsame scattering head, thus e.g. OSSB panels with different product properties such as surface constitution, length distribution of the material particles along the cross section as well as mechanical and physical properties. The fact that at least two different products can be produced with the selfsame scattering head does not exclude that also further scattering heads along the conveyor belt, which are identical in construction or at least similar scattering heads, can add material particles to the mat. In other words, only a part of the mat for the later product can be generated by the scattering head, wherein however the scattering head influences the product properties of the final product depending on operation configuration as described above.

The higher production, maintenance and usage effort of the scattering head caused by providing at least two operation configurations can be not only compensated but even a very low production effort for different products can be achieved thanks to the saving of an entire scattering head, the saving of carrying out setup modifications of the scattering head or of more scattering heads along the conveyor belts and the saving of repositioning the scattering heads. An industrial and economic production of different OSSB panels or OSB panels, respectively, can thereby be enabled.

In one embodiment, two or exactly two operation configurations are provided, wherein preferably the directions of rotation of the individual spindles defined by a first operation configuration are defined by a second operation configurations exactly in opposite directions.

By means of providing of two opposing operation configurations, a very low production, maintenance and usage effort of the scattering head can be enabled.

In one embodiment, the disks are made of a non-metallic material, preferably plastic material, particularly HDPE.

The production expense for the scattering head can thereby be reduced and the weight of the scattering head reduced by half or at least significantly reduced. This enables the arrangement of more rows of spindles and/or more spindles per row without the need to provide a stronger dimensioned and thus more expensive support structure and mounting assembly of the scattering head.

Furthermore, a very low maintenance effort can be achieved with very long material particles of a length range of up to 120 mm and above by using disks made of plastic material thanks to an easy cleaning and not expensive replacement of damaged disks.

As an option, nevertheless also some or all disks can be provided made of a metallic material.

In one embodiment, the spindles, respectively the shafts of the spindles, of the scattering head are arranged in longitudinal direction symmetrically to - respectively around - a substantially vertical and crosswise to the longitudinal direction oriented middle plane. The middle plane divides the scattering head in longitudinal direction in two substantially equal halves.

By means of the in longitudinal direction symmetrical arrangement of the spindles, it is enabled, that different products with the selfsame scattering head can be produced through the different operation configurations or directions of rotation of the disks respectively. Furthermore, it can be avoided that the material particles fall only over a very little longitudinal area and with no or only very low orientation onto the conveyor belt at different directions of rotation of spindles.

In one embodiment, a material supply area is arranged firmly and/or above the spindles of the scattering head.

By means of a firmly and/or above the spindles arranged material supply area the scattering head can be produced and maintained with very little effort.

In one embodiment, a material supply area crosses a substantially vertical and crosswise to the longitudinal direction oriented middle plane or the material supply area is symmetric to the middle plane.

By means of a symmetrical arrangement or a crossing of the material supply area and the middle plane, different products can be produced with the selfsame scattering head. Furthermore, having symmetrical arrangement, mirrored length distributions of the material particles seen along the cross section can be achieved in at least a part of the mat during producing different products.

In one embodiment, the spindles are arranged in at least two or exactly three substantially horizontal rows above each other.

By means of at least two or exactly three substantially horizontal and above each other arranged rows of spindles, the material particles can be distributed over a very large longitudinal area with very differentiated length distribution and cross orientation of the material particles along the longitudinal area onto the conveyor belt.

In one embodiment, the number of spindles of the very upper row or all rows is an odd number.

Through an odd amount of spindles in a row, it can be enabled that at different operation configurations and directions of rotation of the spindles the material particles are shifted very efficiently to one respective side in longitudinal direction during hitting on the spindles in order to become oriented and distributed by the spindles that are arranged in that respective direction.

In one embodiment, finger shaped disks are provided in a very upper row of spindles and/or flat shaped disks are provided in a very bottom row or the remaining rows.

By means of finger shaped disks in the top row, the usually agglomerated material particles can be loosened up very effectively, distributed in crosswise direction, become already roughly oriented in longitudinal direction, get shifted and distributed on a very large longitudinal area onto a there below arranged row of spindles. This applies particularly for very long material particles in a length range of up to 120 mm and above.

By means of flat shaped disks in one or more lower rows, an orientation of the material particles in longitudinal direction also with very long material particles in a length range of up to 120 mm can be achieved very easily despite the described issue in WO0202886. In addition to that, a distribution of the material particles onto the conveyor belt over a very large longitudinal area can be enabled.

As an option, recesses, particularly notches, can be placed on the circumference of a flat shaped disk. Through such recesses, material particles can be distributed over a very large longitudinal area.

In a further development, angular disks, particularly hexagonal or octagonal, can be applied.

In one embodiment, an additional spindle at the end of a substantially horizontally arranged row of spindles can be arranged in such way that the additional spindle is placed above the row of spindles and that the disks of the additional spindle overlaps with the disks of at least one spindle of the substantially horizontally arranged row of spindles. Preferably, the additional spindle is arranged between the last and the last but one spindles of one row.

Through an additional spindle, which is arranged as described above, it can be avoided that material particles do not fall down on the conveyor belt between two spindles but beyond one end of a row of spindles. Inhomogeneities in the mat can thereby be very effectively counteracted.

In one embodiment, one or more spindles at the end of a row of spindles can have an opposite direction of rotation compared to the neighbored, centrally arranged spindles of the selfsame row. Thereby, the material particles can be shifted back very effectively from the end of the row back to the direction towards the middle of the row. The earlier described effects related to the additional spindle can thereby be also achieved or further increased.

In one embodiment, the spindles of the scattering head can have at least two different disk distances along the shaft.

By means of providing different disk distances and therewith different disk gaps between the overlapping disks of two neighbored disks, a length distribution of material particles along a longitudinal area can be influenced well directed and in addition, higher amounts of unwanted particles can be sorted out. A prior, separate working step for screening or filtering the material particles according to particle lengths to achieve a certain length distribution over the longitudinal area and thereby over the cross section of the mat can be saved. It can also be saved a prior, separate working step of sorting out of oversized particles. Finally, through providing at least two different disk distances instead of differently shaped disks for achieving the same effect, mostly disks which are identical in construction can be applied and thereby provided a scattering head with very low production expenses.

In one embodiment, a smaller disk distance at centrally arranged spindles is provided.

By means of providing a smaller disk distance at centrally arranged spindles and/or a bigger disk distance at outer arranged spindles, a screening effect can be very easily achieved, wherein short material particles fall down in the middle and long material particles at the outer end at the scattering head onto the conveyor belt. The beneficial effects achieved with the previous embodiment are further increased by this embodiment.

In one embodiment, in a row of spindles there are fewer centrally arranged spindles having a smaller disk distance compared to a there below arranged row of spindles.

Through fewer centrally arranged spindles with a low disk distance in one row compared to a there below arranged row of spindles, a very precise and reliable length distribution of material particles in longitudinal direction can be achieved and furthermore bigger, unwanted particles can be sorted out.

Preferably, in the one row at most 5, preferably 4, especially preferred 3 centrally arranged spindles have a low disk distance, and/or in the there below arranged row preferably at least 7, especially preferred 9, very preferred at least 11 centrally arranged spindles have a low disk distance.

By means of the above described amount of centrally arranged spindles with low disk distance in two over each other arranged rows of spindles, a very precise and reliable length distribution of the material particles in longitudinal direction as well as a sort out of unwanted, rough components such as not split knots of straw can be achieved with very long material particles in a length range of up to 120 mm. A reliable screening effect can thereby be achieved despite the issues with long, split straw strands as described in WO0202886.

Also disclosed is a scattering arrangement comprises at least two of the particularly above described scattering heads, wherein the scattering heads are arranged along a single conveyor belt.

A single conveyor belt means a coherent conveyor belt, which is placed below the scattering heads and distribution heads of the scattering arrangements in order to move the by the scattering heads and distribution heads piled up mat to the next method step, which does not comprise a distribution of material particles. Conveyor belts of other functional entities such as the material supply are not meant.

Through providing at least two scattering heads, it can be built in a very easy manner on the one hand a mat with at least two separately piled up layers and on the other hand a very large multiplicity of different length distributions over the total cross section of the mat. A symmetrical length distribution over the total cross section of the mat is thereby also very easily realizable.

In one embodiment, the scattering arrangement comprises along the single conveyor belt one or more further distribution heads, which differ from the above described scattering heads and are simpler in construction. The distribution head or distribution heads are placed particularly in the middle between two scattering heads.

By means of providing at least one distribution head between two scattering heads, a mat with two separate outer layers and one separate core late can be generate in a very easy way. Through the usage of distribution heads instead of further scattering heads, a scattering arrangement can be obtained with lower production effort and lower cost of investment. Separate layers can facilitate a higher strength of the later OSSB panels or OSB panels, respectively, and for OSSB panels solve the difficulties due to the not flat straw strands as described in WO0202886. The thickness and strength of the later panel can be very easily influenced well targeted by means of increasing the material throughput of the distribution head and/or through the usage of more distribution heads. Also, depending on the selected operation configuration of the scattering heads, the product properties can be influences very easily. Through changing the operation configuration of the scattering heads, the entire scattering arrangement can also have a setup switch from one product to another product with very low effort and in very short time.

In one embodiment, the distribution head distributes material particles of light, fibrous material, which is not straw.

Thereby, the core layer can be filled up very easily with inexpensive filler materials and OSSB panels or OSB panels can be produced with very low production effort and material expense.

In one embodiment, the distribution head is designed in such way that material particles are distributed with cross orientation on the single conveyor belt.

By that way, a cross orientation of the outer layers and the core layer can be enabled in a very easy manner and therewith a very high stability, which is independent from the direction, of the later OSSB panel or OSB panel can be achieved.

Also disclosed is a method to produce an OSSB panel or OSB panel with a scattering head for distribution of binder covered material particles on a conveyor belt, preferably a scattering head according to above description. The scattering head comprises spindles and a control unit with an operation configuration for defining the direction of rotation of the spindles. Preferably, the material particles comprise mostly longitudinal split straw. Alternatively, the material particles comprise mostly longitudinal wooden particles. The method comprises that one of at least two operation configurations of the control unit of the scattering head is selected or activated to produce an OSSB panel or OSB panel, respectively.

By means of the above described method, several different products can be produced with very few production effort through the selection or activation of the respective operation configuration for the respective product. A laborious setting up of the scattering heads during change of the production to another product does not take place.

It is remarked that the above described method for the production of an OSSB panel can also be only one production step for producing an OSSB panel, wherein the method only contributes to one layer of a multi-layered OSSB panel, wherein the material particles are distributed over the conveyor belt in a manner according to the method in order to form a layer of a mat as pre-product of later OSSB panels. If the OSSB panel has only of one layer, the entire mat of the later OSSB plate is formed by the above described method. Same applies for OSB panels.

In one embodiment of the method, it can only be selected among two operation configurations and that preferably the two operation configurations provide each the opposite direction of rotation for the individual spindles.

Through a method with only two selectable or activatable operation configurations, a very easy handling can be enabled. Furthermore, through a method with two operation configurations with respectively opposing directions of rotation, two differently structured OSSB panels or OSB panels can be produced very flexible and with low effort.

Also disclosed is a method to produce an OSSB panel or OSB panel with a scattering arrangement, particularly a scattering arrangement according to the above description, comprising at least two scattering heads and/or a simple constructed distribution head to distribute material particles arranged with a distance in the middle between two scattering heads along a conveyor belt. The method comprises that at each of the scattering heads, one of at least two operation configurations of a control unit for defining the direction of rotation of spindles of the scattering heads is selected or activated.

Through this, an OSSB panel or OSB panel with several different and dissimilar composed layers for different fields of application can be produced with very low production effort and it can be switched from the production of the a product very fast and easy to the production of another product.

In one embodiment, the two operation configurations each define opposite directions of rotation of the spindles and/or opposite operation configurations are selected at two scattering heads to produce an OSSB panel or OSB panel.

By selecting opposing operation configurations at both scattering heads, it can be obtained a substantially symmetrical length distribution of the material particles over the cross section of the OSSB panel in a very easy way. Through such symmetrical structure of the OSSB panel along the section, a very homogeneous load absorption can be enabled by the OSSB panel and the OSSB panel remains flat without or with only little deformation also when facing environmental influences like humidity and temperature variations. Furthermore, the same surface characteristics can be obtained on both sides. Same applies for an OSB panel.

In one embodiment, the distribution head is supplied with differently composed and/or with different amounts of material particles compared to the distribution heads.

Different composition of the material particles refers to the particle length distribution and/or the light fibrous material itself, which does not need to be straw like at the scattering heads or comprises only a certain portion of straw.

Depending on the product requirements, the production expense can be reduced through the change of the average particle length for distribution by the distribution head as well as by the possibility to use cheaper raw materials such as preprocessed recycling waste. Through the change of the material and the amount at a distribution head, OSSB panels respectively OSB panels with different thickness and under very low effort can be produced.

A layer of an OSSB panel according to the invention or OSB panel is produced in particular with one of the above described methods, in particular with a scattering head as described above. The layer of the OSSB panel according to the invention comprises binder covered and compressed material particles mostly of longitudinal split straw, wherein preferably almost all material particles of the layer are processed through the selfsame scattering head.

At a layer of an OSB panel, the material particles comprise mostly longitudinal wooden particles. The following embodiments apply analogical for a layer of an OSB panel.

The layer has a first surface and a second surface at the opposite side of the layer, wherein both surfaces extend in parallel to the OSSB pane! surface. The OSSB panel surface has a length and a width, wherein the length extends in longitudinal direction and is bigger than the width, wherein the width is bigger than the thickness of the OSSB panel. In cross direction, the distance of the first surface to the second surface equals exactly the layer thickness.

The layer comprises material particles with a length L over a length range of 0 < L ≤ 120 mm, which can be subdivided into six equal length segments, preferably 12 equal length segments, wherein the length distribution of the material particles covers each of these length segments of the layer of the OSSB panel. All material particle lengths within the above through length segments described raster are thus there, respectively represented, respectively comprised, between 0 < L ≤ 120 mm.

Material particles with a length > 9,5 mm are comprised in the first surface of the layer with a portion of > 30 % and/or in the second surface of the selfsame layer (19) with a portion of < 30 %.

According to the invention, material particles are comprised with a length > 9,5mm in the first surface of the layer with a portion of > 35 % and in the second surface of the selfsame layer with a portion of < 20 %, preferred < 15 %.

For determination of the material particle portion of a surface and their length, there are two alternative procedures.

At the first procedure according to the invention, every material particle is regarded as comprised by the surface, if it is partly visible at the surface. The length L of the material particles then correspond to at least the visible length, which can be assigned - respectively allocated - to the selfsame material particle. If a material particle is laying visibly at the surface, then the visible length is not changed by other overlapping material particles, which cross or partly cover the respective material particle between it's at the surface visible beginning and end.

If the respective surface is not outward, it is necessary to section the OSSB panel along that respective surface. Such a section has to be conducted by means of a non-cutting separating process such as splitting at the layer border.

At the first procedure, the percent values concern the portion of the visible surface, which is covered by the material particles of a certain length.

At the second procedure, the scattering head, which processes the material particles of the layer, is divided into zones of 0,5 m each in longitudinal direction to the conveyor belt, wherein only that part of the scattering head is considered, which distribute material particles on the conveyor belt in a targeted manner. The zones thus cover no spindles, by which no material particles shall be delivered for producing the respective layer. A container is arranged below each zone for catching the material particles and the scattering head is properly activated for the production of the respective layer.

The container of the first and last zone comprise material particles of the first and second surface. By means of a screening procedure with mash or opening width of 9,5 mm, the material particles can be separated.

At the second procedure, the percent values concern the weight portion of the material particles.

Through a layer with a surface, which comprises material particles with a length of > 9,5 mm to a portion of > 30 %, the advantages of long material particles can be used in a targeted manner to optimizing certain product properties. Long material particles of straw in a outward laying surface enable a very high reflection of light and thereby contribute to brighten up a room, if a corresponding OSSB panel is used for the completion of the interior. Furthermore, long straw strands at the surface achieve an optical attractive effect.

By means of a layer with a surface, which comprises material particles with a length of > 9,5 mm of the entirely covered length range of 0 < L ≤ 120 mm to a portion of < 30 %, a very high material density and strength can be achieved. As outer layer, a very rough and therefore anti-sliding surface of an OSSB panel can be further obtained.

An OSSB panel with the above described layer is therefore very well suited for the construction industry and can be used as construction board for the building fabrication as well as for completion of the interior depending on configuration of the layer and integration in the OSSB panel.

In a further development, material particles are comprised with a length > 9,5 mm in one of the surfaces of the layer to a visible portion of > 50 % and/or to a weight portion between 30 % and 60 %.

In a further development, the material particles are comprised with a length between 6,3 and 9,5 mm in the first surface of the layer to a weight portion of 15 to 25 % and/or in the second surface of the selfsame layer to a weight portion of < 20 %.

In a further development, the material particles are comprised with a length between 4 to 6,3 mm in the first surface of the layer to a weight portion of 10 to 25 % and/or in second surface of the selfsame layer to a weight portion of < 30 %.

In a further development, the material particles are comprised with a length between 2 to 4 mm in the first surface of the layer to a weight portion of 5 to 20 % and/or in second surface of the selfsame layer to a weight portion between 20 to 30 %.

In a further development, the material particles are comprised with a length between 1 to 2 mm in the first surface of the layer to a weight portion of < 8 % and/or in second surface of the selfsame layer to a weight portion between 10 to 20 %.

In a further development, the material particles are comprised with a length < 1 mm in the first surface of the layer to a weight portion of 5 to 40 % and/or in second surface of the selfsame layer to a weight portion < 15 %.

By means of the above shown further developments of the layer with predefined length distributions of the material particles along the cross section, wherein the material particle length continuously decrease respectively increase along the cross section, a very homogenous power conduction also under bending is enabled. Furthermore, a very high and homogenous bending and cross-pull strength in longitudinal and crosswise direction of the OSSB panel can be facilitated.

Also disclosed is an OSSB panel or OSB panel, particularly produced according to one of the above described methods and under usage of particularly the above described scattering arrangement, comprising at least two separate outer layers and at least one separate, inner core layer.

Separate layer means that during forming a mat of material particles on a conveyor belt, the layer is processed, distributed respectively built by means of a separate and in longitudinal direction of the conveyor belt with a distance to each other arranged scattering head or distribution head, and not together with further layers through a single apparatus. Essentially here is for example a sufficient distance in longitudinal direction of the conveyor belt, which reduces or prevents blending between material particles of two layers during distribution on the conveyor belt, as well as a separate material flow for the scattering head or distribution head for one separate layer.

By providing at least two separate outer layers and at least one separate core layer, a multiplicity of advantages can be achieved.

The length distribution of the material particles in the outer layers can be adapted in a targeted manner to the required product properties in a very easy and low effort way. The thickness of the OSSB panel can be influenced very easily and with low effort by increasing or reducing the material throughput of the apparatus, which piles up the core layer. Very thick OSSB panels or OSB panels can be realized by activation of a further distribution head for piling up a second core layer in a very ease way.

In all, by providing separate layers it is enabled that a very large area of different product properties can be realized in a very easy and low effort manner.

Further advantages are rooted in the very high strength of an OSSB panel with several separate layers. The strength issue when using pipe shaped straw strands as described in WO0202886 can thereby be resolved.

A specific orientation of the material particles, which can differ from layer to layer, is also realizable through providing separate layers in a very flexible, simple and low effort way.

Finally, two separate outer layers with an inner core layer enable a targeted influencing of the surface characteristic with at the same time low production expense.

In one embodiment, an outer layer is solely comprising material particles of straw. Preferably, nearly mostly of the straw has a half-shell-shape.

By means of an outer layer with solely half-shell-shape straw particles, an OSSB panel can be provided with very high strength.

In one embodiment, a core layer comprises a portion or solely material particles of a light, fibrous material, which is not straw.

By means of providing a core layer with a portion or solely material particles of a light, fibrous material, which is not straw, cheap filler materials, for example preprocessed waste materials or cheap vegetable material, can be used, and an OSSB panel with very low production expense can thereby be provided.

In one embodiment, the density of the core layer and/or a glue content in the binder are different, particularly higher, compared to the outer layers.

Through different densities and glue contents of the binder in the core layer and outer layers, an OSSB panel can be produced with very low production expense. Due to the favorable course of the force lines in the core layer compared to the outer layers, a very high stability of the panel can be achieved by a slightly higher glue content in the core layer. In addition, by reduction of the glue content in an outer layer, glue can be saved without overly reducing the stability of the panel.

In one embodiment, the material particles of the core layer are majorly cross-oriented and the material particles of an outer layer majorly longitudinally oriented.

Through providing a cross orientation, a very high strength of the OSSB panel in all directions can be obtained, particularly a very high and homogenous bending and cross-pull-strength in longitudinal and cross direction of the OSSB panel.

Also disclosed is an OSB panel (Oriented Strand Board), which is produced according to one of the above described a methods.

In the following, an exemplary embodiment of a scattering head, a scattering arrangement with method as well as an OSSB panel with several layers according to the invention are described with the help of the figures.

It shows:
Figure 1: Scattering head
Figure 2: Second surface of a layer of an OSSB panel (schematic and photographic illustration)
Figure 4: Operation of a scattering head in a first operation configuration
Figure 5: Operation of a scattering head in a second operation configuration
Figures 6, 7: Length distribution of the material particles according to the second procedure
Figure 8: Scattering arrangement with 2 scattering heads and 2 distribution heads
Figure 9: Cross section of an OSSB panel with 4 layers and long, outward laying material particles
Figure 10: Cross section of on OSSB panel with 4 layers and short, outward laying material particles

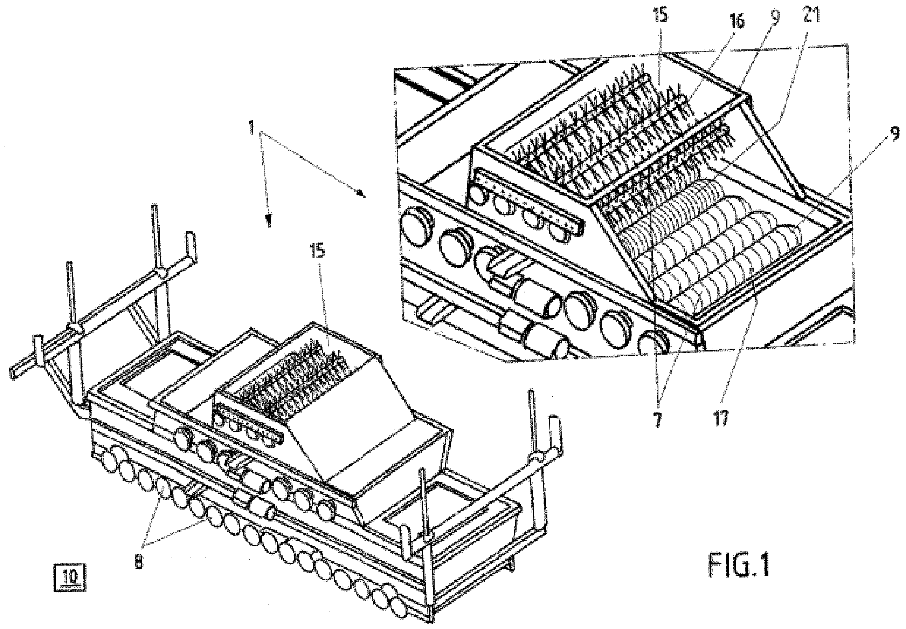

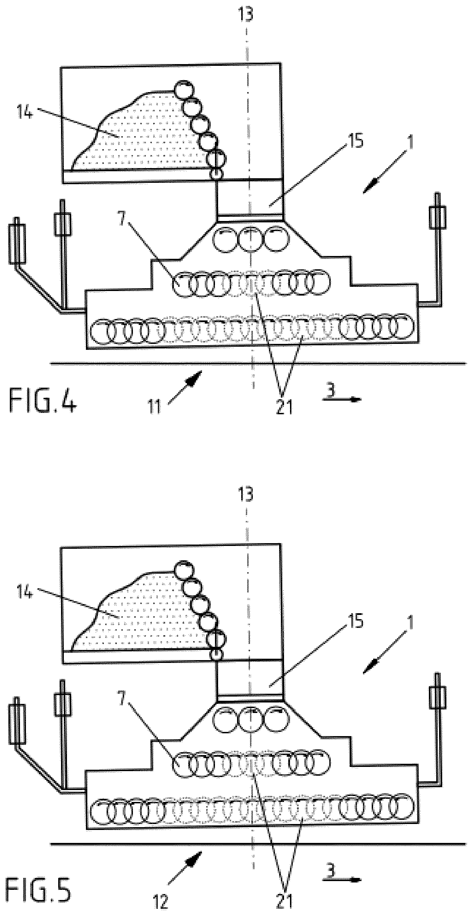

The figures 1 and 4 to 8 show scattering head 1 for distribution of binder covered material particles 2 on a in longitudinal direction 3 moving conveyor belt 4, which in principle can move in only one longitudinal direction 3, for forming a mat 5 on the conveyor belt 4 for a later compressing 6 to an OSSB panel, wherein the scattering head 1 shows the largest expansion in longitudinal direction 3 and is arranged substantially in parallel to the longitudinal direction 3 of the conveyor belt 4 about 15 to 25 mm above the conveyor belt 4. Generally, the scattering head 1 is tilted a few degrees, so that the distance to the conveyor belt 4 in longitudinal direction 3 slightly increases. The scattering head 1 comprises rotatable spindles 7, which are arranged with a distance to each other in longitudinal direction 3 and which each comprise a shaft 8 in crosswise direction to the longitudinal direction 3, wherein a multiplicity of disks 9 are arranged with a distance between each other at the shaft 8, wherein at least at some of the disks 9 of two neighbored spindles 7 the disk radius is bigger than half of the longitudinal distance between the shafts 8 of the neighbored spindles 7, so that the disks 9 can overlap at least partially.

The scattering head 1 comprises a control unit 10, which is connected through a cable (not shown), with at least two different operation configurations 11, 12, wherein the direction of rotation of all spindles 7 of the scattering head 1 are defined by the operation configuration 11, 12.

The first operation configurations 11 and the second operation configuration 12 provide exactly opposite directions of rotations of the individual spindles 7. The scattering head 1 is formed in longitudinal direction 3 substantially symmetrically to a middle plane 13.

A bunker 14 provides an intermediate storage and targeted supply of the material particles 2 in the material supply area 15, which is assembled firmly above the spindles 7 of the scattering head 1 and in longitudinal direction 3 arranged symmetrically to the middle plane 13.

The spindles 7 are arranged in three horizontal rows above each other. In the upper row, there are finger shaped disks 16 and in the middle and very bottom row mostly flat shaped disks 17. In the middle row, the three spindles 21 (marked with dotted lines respectively dashed line), which are arranged symmetrically to the middle plane 13, have a lower disk distance of the disks 9, 17. The eleven disks 21, which are arranged symmetrically to the middle plane 13 in the very bottom row, also have the same low disk distance. The disks 9, 16, 17 of the remaining spindles have a bigger distance.

The flat shaped disks 7 are made of HDPE.

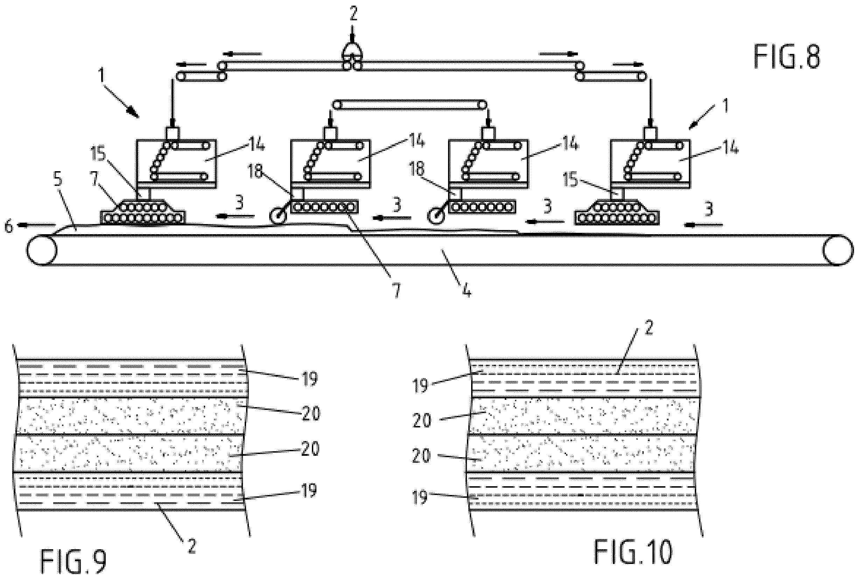

The figure 8 shows a scattering arrangement with two scattering heads 1 and two distribution heads 18 along a single conveyor belt 4. The distribution heads 18 distribute light, fibrous materials other than straw on the conveyor belt 4, for example preprocessed recycling waste material. Depending on product, also straw particles are mixed up with recycling waste materials and processed by means of the distribution heads 18. The distribution heads 18 are furthermore designed in a way, that during the distribution a cross orientation of the material particles 2 on the conveyor belt 4 can be conducted.

Through the selection between both operation configurations 11, 12 at both scattering heads 1 of the scattering arrangement, differently composed OSSB panels can be produced.

For production of a four-layer OSSB panel with long material particles 2 at the visible surface as shown in figure 9, the first operation configuration 11 is selected respectively activated at the first scattering head 1 in conveyor belt direction 3 of the conveyor belt 3 as well as the second operation configuration 12 is selected respectively activated at the second scattering head 1 at the end of the conveyor belt 4.

At the first scattering head 1, mostly long material particles 2 are thereby transported by the spindles 7 in opposite direction to the conveyor belt direction 3 and thus fall as first on the conveyor belt 4. Long material particles 2 therefore form the first surface, which remains visible in the later OSSB panel. Gradually smaller becoming particles 2 are then distributed over the long material particles 2 at the surface. The first outer layer 19 is thus generated.

Depending on desired thickness of the later OSSB panel, one or two distribution heads 18 can be activated in order to generate the core layer 20 between the outer layers 19. In case of the OSSB panel shown in figure 9, both distribution heads 18 are activated.

At the last scattering head 1, through activation of the second operation configuration, which provides in the opposite direction oriented directions of rotation of the individual spindles 7, mostly long material particles 2 are transported by respectively over the spindles 7 in conveyor belt direction 3 and thereby fall as last on the conveyor belt 4. Long material particles 2 thus form the other visible surface of the later OSSB panel.

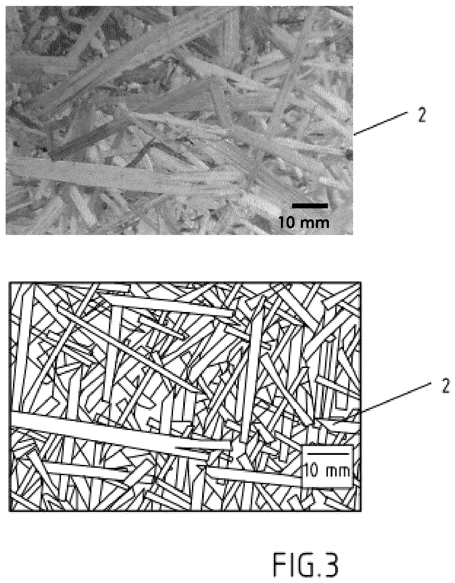

The by this way generated OSSB panel surface is shown in figure 3. Long material particles 2 cover the surface to a high portion and dominate the look.

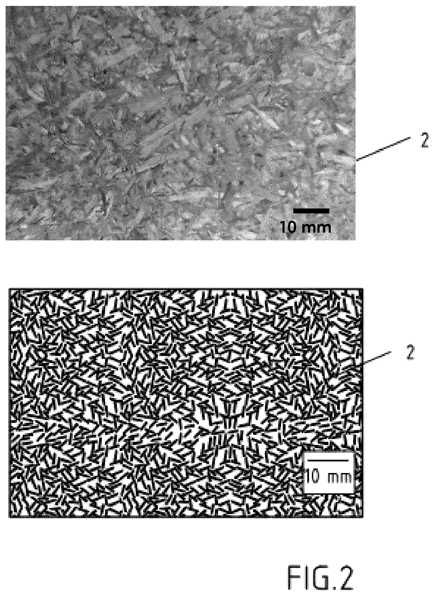

In figure 2, an OSSB panel surface is shown, which was produced under selection of the second operation configuration 12 at the first scattering head 1 and the first operation configuration 11 at the second scattering head 1. The surface is covered with small material particles 2.

The determination of the material particle contents of the surface and their length is conducted according to the first procedure by means of graphical marking of all those areas of the parts of material particles with a certain length (e.g. > 9,5 mm), which are visible at the surface. Through dividing the sum of those areas by the area of the total surface, the corresponding portion (e.g. for > 9,5 mm material particles) can be determined.

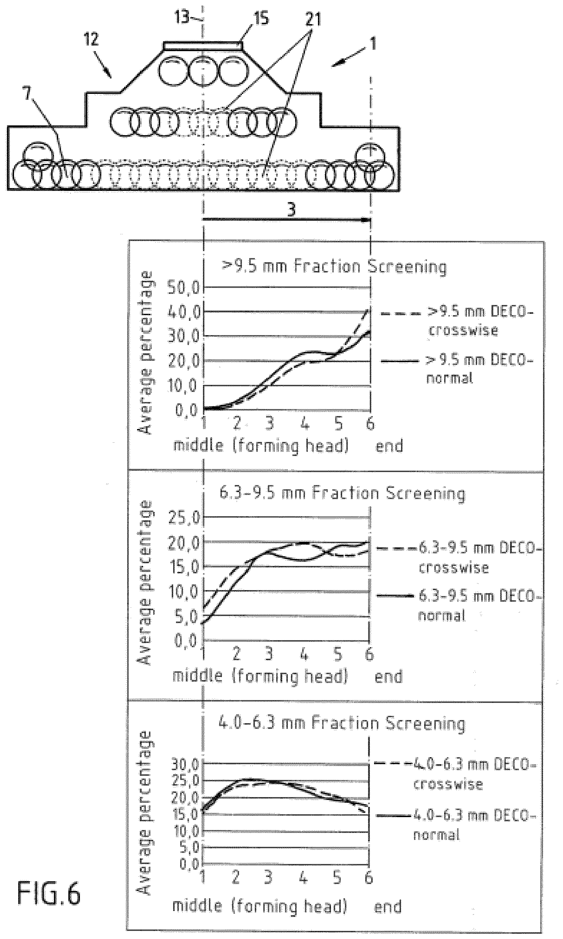

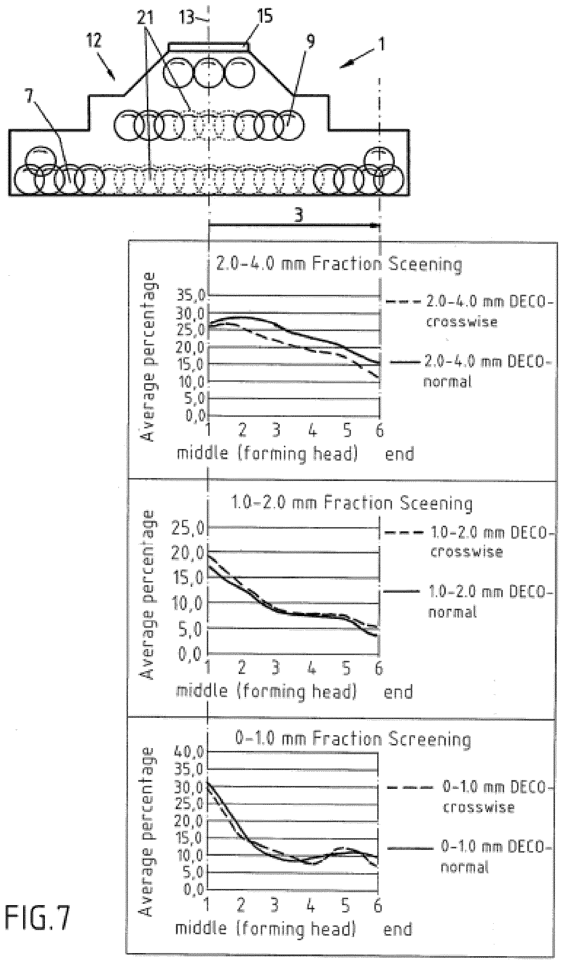

On the basis of the second procedure, the length distributions of the material particles 2 in a separate layer of the OSSB panel was determined in weight percent and illustrated in the figures 6 and 7.

According to the second procedure, 60 samples were taken and evaluated by means of containers of 50 grams in the laboratory. Every 0,5 m forms one zone, of which a sample below the scattering head 1 was taken, beginning at the middle 13 to the very outer spindle 7 for material particle distribution. This separation resulted in 6 zones. The dashed curve in the diagrams of figures 6 and 7 mark up samples, which were taken crosswise from the middle to the end, while the non-dashed curve represent samples, which were taken straight from the middle to the end, wherein the deviation of both curves roughly lays in the variance of distribution.

The material particles 2 have a continuous length distribution between > 0 (fines) to ≤ 120 mm. Generally, it is always possible, that there are also some material particles with a length bigger than 120 mm. However, the portion is almost negligible. Thanks to the continuous length distribution, nearly all material particle lengths are represented in the above areas. Effort requiring screening processes are not necessary for to obtaining an OSSB panel with the desired mechanical properties.

Through selecting the operation configuration 11, 12 at the scattering heads 1, a multiplicity of different products can be produced without mentionable re-setups in the production line. In addition, the product properties can be further targeted influenced by the decision about activation of non, one or both distribution heads 18, by the decision about the respective material particles throughput volumes at the scattering head 1 and distribution head 18 as well as by the selection of the materials for processing in a distribution head 18.

The basic concept is generally also suitable for use in the food industry, where for example mass-produced pastry goods only differ in the layer composition related to the length distribution and thickness.

Particularly, straw also means reed.

Particularly, the disk distance at centrally arranged spindles is at least 10 mm, preferably 15 mm, very preferred 18 mm, and/or at most 30 mm, preferably 25 mm, very preferred 22mm.

Particularly, there is provided a big disk distance at outwardly arranged spindles, preferably with a disk distance of at least 30 mm, preferably 35 mm, very preferred 40 mm, and/or at most 55 mm, preferably 55 mm, very preferred 45 mm.

Through providing a low disk distance at centrally arranged spindles in the above described ranges and/or a big disk distance at outwardly arranged spindles in the above described ranges, a screening effect can be enabled in a very easy way, wherein short material particles can fall in the center and long material particles can fall outwards at the scattering head on the conveyor belt. The earlier described advantageous effects can thereby further increased.

Particularly, flat shaped disks have a diameter of at least 200 mm, preferably 300 mm, very preferred 350 mm, and/or at most 600 mm, preferably 500 mm, very preferred 450 mm.

The above described disk distances and disks diameter can result in a very reliable screening effect with very long material particles in a length range of up to 120 mm and higher despite the issues described in WO0202886 in the context of long, split straw strands. Furthermore, a sort out of unwanted, rough components such as not-split nodes at one end of the scattering head is enabled.

Particularly, the disks or the flat shaped disks are made of non-ferrous materials such as aluminum. This helps to reduce weight and at the same time obtain very good damage resistance.

As an option, nevertheless also some or all disks can be provided made of a ferrous material.

## Claims

1. OSSB panel (Oriented Structural Straw Board), which comprises at least two outer layers, wherein at least one of the outer layers (19) comprises binder covered and compressed material particles (2) mostly of longitudinal split straw, wherein the layer (19) has a first surface and a second surface at the opposite side of the layer, wherein both surfaces extend in parallel to the OSSB panel surface and have in cross direction a distance to each other of the size of the layer thickness of the layer (19), **characterized in that** the layer (19) comprises material particles (2) with a length L over an entirely covered length range of 0 < L ≤ 120 mm, which can be subdivided into six equal length segments, wherein the length distribution of the material particles (2) of the layer (19) of the OSSB panel covers each of these length segments, and material particles (2) with a length > 9,5 mm are comprised in the first surface of the layer (19) with a portion of > 35 % and in the second surface of the selfsame layer (19) with a portion of < 20 %, wherein every material particle (2) is regarded as comprised by the surface, if it is partly visible at the surface, wherein the length L of the material particles (2) then correspond to at least the visible length, which can be assigned to the selfsame material particle (2).

2. OSSB panel of the preceding claim, **characterized in that** the length distribution of the material particles (2) of the layer (19) along the cross section is composed in such way that the material particle length continuously decrease or increase along the cross section.

3. OSSB panel of claim 1, **characterized in that** the outer layers (19) are composed symmetrically along the cross section of the OSSB panel concerning the length distribution of the material particles, and/or that the outer layer (19) comprises nearly solely material particles (2) of straw, preferably mostly with half shell shape.

## Patentansprüche

1. OSSB-Platte (Oriented Structural Straw Board), die mindestens zwei Außenschichten umfasst, wobei mindestens eine der Außenschichten (19) mit Bindemittel überzogene und verpresste Materialpartikel (2) überwiegend aus längs gespaltenem Stroh umfasst, wobei die Schicht (19) eine erste Oberfläche und eine zweite Oberfläche an der gegenüberliegenden Seite der Schicht hat, wobei beide Oberflächen parallel zur OSSB-Plattenoberfläche verlaufen und in Querschnittsrichtung einen Abstand in Größe der Schichtdicke der Schicht (19) aufweisen, **dadurch gekennzeichnet, dass** die Schicht (19) Materialpartikel (2) mit einer Länge L über einen Längenbereich 0 < L ≤ 120 mm umfasst, der in 6 gleiche Längenabschnitte unterteilt werden kann, wobei die Längenverteilung der Materialpartikel (2) der Schicht (19) der OSSB-Platte jeden dieser Längenabschnitte abdecken und Materialpartikel (2) mit einer Länge > 9,5 mm in der ersten Oberfläche der Schicht (19) zu einem Anteil > 35 % umfasst sind und in der zweiten Oberfläche derselben Schicht (19) zu einem Anteil < 20 % umfasst sind, wobei jeder Materialpartikel (2) als von einer Oberfläche umfasst gilt, wenn dieser zum Teil an der Oberfläche sichtbar ist, wobei die Länge L des Materialpartikels (2) dann mindestens der sichtbaren Länge entspricht, die demselben Materialpartikel (2) zugeordnet werden kann.

2. OSSB-Platte nach dem vorhergehenden Anspruch, **dadurch gekennzeichnet, dass** die Längenverteilung der Materialpartikel (2) der Schicht (19) über den Querschnitt so beschaffen ist, dass die Materialpartikellänge über den Querschnitt stetig abfällt oder ansteigt.

3. OSSB-Platte nach Anspruch 1, **dadurch gekennzeichnet, dass** die Außenschichten (19) in Bezug auf die Längenverteilung der Materialpartikel spiegelsymmetrisch über den Querschnitt der OSSB-Platte aufgebaut sind.

## Revendications

1. Panneau OSSB (Oriented Structural Straw Board), qui comprend au moins deux couches extérieures, dans lequel au moins l'une des couches extérieures (19) comprend des particules de matière (2), recouvertes de liant et comprimées, principalement de paille fendue longitudinale,
dans laquelle la couche (19) a une première surface et une seconde surface du côté opposé de la couche, les deux surfaces s'étendant parallèlement à la surface du panneau OSSB et ayant, dans la direction transversale, une distance l'une par rapport à l'autre de la taille de l'épaisseur de couche de la couche (19), **caractérisé en ce que** la couche (19) comprend des particules de matériau (2) d'une longueur L sur une plage de longueur entièrement couverte de 0 < L ≤ 120 mm, qui peuvent être subdivisées en six segments de longueur égale, la distribution de longueur des particules de matériau (2) de la couche (19) du panneau OSSB couvrant chacun de ces segments, et des particules de matériau (2) d'une longueur > 9,5 mm sont comprises dans la première surface de la couche (19) avec une partie > 35 % et dans la deuxième surface de la même couche (19) avec une partie < 20 %, chaque particule de matériau (2) étant considérée comme comprise dans la surface, si elle est partiellement visible en surface, la longueur L des particules de matériau (2) pouvant alors correspondre à au moins la longueur visible, laquelle peut être assignée à la particule de même matériau (2).

2. Panneau OSSB selon la revendication précédente, **caractérisé en ce que** la répartition en longueur des particules de matériau (2) de la couche (19) le long de la section transversale est composée de telle manière que la longueur des particules de matériau diminue ou augmente continuellement le long de la section transversale.

3. Panneau OSSB selon la revendication 1, **caractérisé en ce que** les couches extérieures (19) sont composées symétriquement le long de la section transversale du panneau OSSB en ce qui concerne la répartition longitudinale des particules de matériau, et/ou **en ce que** la couche extérieure (19) comprend presque exclusivement des particules de matériau (2) en paille, de préférence de préférence en forme de demi-coque.
